# EUROPÄISCHE PATENTSCHRIFT

(11) **EP 2 601 145 B1**
(45) Veröffentlichungstag und Bekanntmachung des Hinweises auf die Patenterteilung: **10.12.2014**
(21) Anmeldenummer: 12721481.5
(22) Anmeldetag: 09.05.2012
(51) Int. Cl.: C02F 3/06, C02F 3/10

(54) **Festbettreaktor mit zwei Schichten und Verfahren ihn zu betreiben**
Fixed-bed reactor having with two layers and process to operate it
Réacteur à lit fixe ayant deux couches et procédé de son opération

(30) Priorität: 12.05.2011 CH 803112011
(43) Veröffentlichungstag der Anmeldung: 12.06.2013
(73) Patentinhaber: Wabag Wassertechnik AG, 8401 Winterthur (CH)
(72) Erfinder: BAGGENSTOS, Martin, CH-8404 Winterthur (CH); RYHINER, Gerhard, CH-8405 Winterthur (CH)
(74) Vertreter: KLIMENT & HENHAPEL
(86) Internationale Anmeldenummer: PCT/EP2012/058535
(87) Internationale Veröffentlichungsnummer: WO 2012/152830

(56) Entgegenhaltungen:
- EP-A1- 0 430 886
- WO-A1-87/03217
- DE-C1- 19 717 854
- FR-A1- 2 760 738

## Beschreibung

Die Erfindung betrifft einen Festbettreaktor zur biologischen Abwasserreinigung, umfassend zumindest
- eine erste Schicht bestehend aus einem körnigen ersten Trägermaterial, sowie
- eine darüber befindliche zweite Schicht bestehend aus einem körnigen zweiten Trägermaterial, welches eine geringere Dichte als das erste Trägermaterial aufweist, jedoch schwerer als Wasser ist,
- einen Zulauf für Abwasser nahe dem Boden des Festbettreaktors,
- einen Zwischenboden mit einem darüber liegenden befüllbaren Volumen für das Trägermaterial,
- eine Verteilkammer, welche durch den waagrechten Zwischenboden vom darüber liegenden befüllbaren Volumen für das Trägermaterial getrennt ist, sowie ein Verfahren zum Betreiben eines solchen Festbettreaktors.

Ein Festbettreaktor zeichnet sich dadurch aus, dass ein Fluid, im gegenständlichen Fall Abwasser, durch eine feste Schüttung oder Packung aus Trägermaterial strömt. Dieses Trägermaterial dient dabei der Fixierung von Mikroorganismen, welche bestimmte organische Bestandteile des Abwassers abbauen, sowie der Filtration von partikulären, d.h. ungelösten Stoffen. Die Mikroorganismen, großteils Bakterien, bilden auf dem Trägermaterial, das die Schüttung oder Packung des Festbetts aufbaut, einen Biofilm oder Rasen. Je nachdem, welcher biologische Reinigungsprozess ablaufen soll, wird der Festbettreaktor belüftet.

Durch den Reinigungsprozess nimmt die Menge an Mikroorganismen und zurückgehaltenen partikulären Stoffe zu. Jene Menge, welche die für den Reinigungsprozess benötigte Menge überschreitet und den Festbettreaktor verstopfen würde, wird durch periodisches Spülen als Überschussschlamm zusammen mit den partikulären Stoffen aus dem Festbettreaktor entfernt. Beim Spülen wird in der Regel zuvor im Festbettreaktor gereinigtes Wasser als Spülwasser von oben oder von unten durch den Festbettreaktor geleitet, zusätzlich wird von unten Spülluft zugegeben, in der Regel durch die ohnehin vorhandene Belüftungseinrichtung.

Festbettreaktoren zur Abwasserreinigung werden in der Regel während des Betriebs im Aufstrom mit Abwasser betrieben, das heißt, das Abwasser wird durch einen Zulauf und gegebenenfalls durch anschließende Verteileinrichtungen durch den Boden oder nahe dem Boden in den Festbettreaktor eingebracht und von unten nach oben durch den Festbettreaktor geführt. Durch die Führung des Abwassers gegebenenfalls im Gleichstrom mit der Prozessluft aus den Belüftungseinrichtungen ergeben sich günstigere hydraulische Verhältnisse als wenn das Abwasser von oben nach unten geführt würde.

Die bei Festbettreaktoren eingesetzten Trägermaterialien können grundsätzlich leichter oder schwerer als Wasser sein, für die gegenständliche Anwendung sind sie schwerer als Wasser. Sie können aus verschiedenen Materialien bestehen, etwa aus Kunststoff oder mineralischen Materialien gefertigt sein. Die einzelnen Körper eines Trägermaterials gleichen sich in Form und Größe. Meist wird auch nur ein einziges Trägermaterial als Filtermedium verwendet, das zwar - insbesondere bei mineralischer Herkunft - in Form und Größe etwas variieren kann, z.B. eine Korngrößenverteilung aufweisen kann, aber im Festbettreaktor als uniforme Schüttung vorkommt.

Unter "körnigem Trägermaterial" versteht man Trägermaterial, das als lose Schüttung in den Reaktor eingebracht wird, im Gegensatz zu fix mit dem Festbettreaktor und/oder untereinander verbundenen Gittern von Trägermaterial. Blähton, Sand, Bims, Anthrazit (Anthrazitkohle), Aktivkohle oder Blähschiefer etwa ist körniges Trägermaterial.

Betreffend die Körnung, also die Korngröße der einzelnen Körner bzw. Körper des Trägermaterials, ist einerseits eine möglichst kleine Korngröße von Vorteil, da man damit eine möglichst große verfügbare Oberfläche für die Mikroorganismen zum biologischen Abbau zur Verfügung hat. Aufgrund des geringen Zwischenraums zwischen den einzelnen Körnern bzw. Körpern des Trägermaterials kann das Festbett aber dadurch leichter verstopfen. Eine möglichst große Korngröße bewirkt im Gegensatz dazu, dass eine größere Menge an Feststoffen im Festbettreaktor zurückgehalten werden kann. Aufgrund des größeren Zwischenvolumens zwischen den Körnern bzw. Körpern reduziert sich die Gefahr einer Verstopfung des Festbetts und die mögliche Betriebszeit zwischen zwei Spülungen wird erhöht.

### STAND DER TECHNIK

Die FR 2 760 738 zeigt einen aufsteigend betriebenen Festbettfilter zur biologischen Abwasserreinigung, wo auf einer Platte mehrere Schichten körnigen Materials angeordnet sind, mit einer Belüftung. Die beiden unteren Schichten aus Kiesel mit Durchmessern von bis zu 80 mm dienen als Stützschichten.

Die EP 0 430 886 A1 betrifft ein Verfahren zur Wasserreinigung, wobei man das mit halogenierten Kohlenwasserstoffen belastete Wasser durch einen oder mehrere Fest- oder Fließbettreaktoren leitet, welche mit einem Adsorptionsmaterial gefüllt sind, beispielsweise mit Blähschiefer, Blähton oder Aktivkohle.

Die DE-C1-19717854 beschreibt ein Verfahren und eine Kläranlage zum biologischen Reinigen von organisch belastetem Abwasser. In der Kläranlage finden drei Reinigungsstufen statt, eine Absetz- und Kompostiereinrichtung, ein erstes bepflanztes Filterbett und ein zweites bepflanztes Filterbett. Das Filter des ersten bepflanzten Filterbettes besteht aus einem mineralischen Granulat bestimmter Körnung, welches bestimmte chemische Eigenschaften zur Adsorption der im Wasser gelösten Stoffe aufweist.

Die DE 195 12 907 C1 zeigt ein Verfahren zur Abwasserreinigung mit einem pelletförmigen Reaktormaterial, wo einer der möglichen Verfahrensschritte ein Festbett umfasst, bei welchem zwei Schichten Trägermaterial mit unterschiedlicher Dichte und Korngröße zum Einsatz kommen, und zwar eine erste (untere) Schicht mit größerer Dichte und kleinerer Korngröße als jene der zweiten (oberen) Schicht. Da das zu reinigende Abwasser zuerst auf die untere Schicht mit kleiner Korngröße trifft, neigt diese zu Verstopfung des Reaktorquerschnitts.

Beim Durchströmen eines Festbetts von unten nach oben finden über die Betthöhe unterschiedliche Abbauprozesse statt. Es siedeln sich in verschiedenen Schichten des Festbetts spezialisierte Mikroorganismen an, die jeweils unterschiedliche Inhaltsstoffe des Abwassers abbauen können. Beim Spülen des Festbettreaktors, insbesondere unter Zuhilfenahme von Spülluft, wird das Festbett in der Regel zu einem gewissen Grad vermischt, wodurch diese Spezialisierung wieder verloren geht.

Es ist eine Aufgabe der vorliegenden Erfindung, einen Festbettreaktor und ein entsprechendes Verfahren zu seinem Betrieb zur Verfügung zu stellen, gemäß welchen die Spezialisierung unterschiedlicher Schichten des Festbetts nach dem Spülen besser beibehalten und gleichzeitig die Zeit bis zur nächsten Spülung verringert werden kann.

### DARSTELLUNG DER ERFINDUNG

Diese Aufgabe wird durch einen Festbettreaktor gemäß Anspruch 1 gelöst, indem das erste Trägermaterial eine größere Korngröße aufweist als das zweite Trägermaterial und nur diese beiden Schichten aus Trägermaterial im befüllbaren Volumen angeordnet sind.

Dadurch, dass das erste (untere) Trägermaterial einen größeren Korndurchmesser aufweist als das zweite (obere) Trägermaterial, können in der ersten (unteren) Schicht mehr Feststoffe, die sich um Zulauf befinden und/oder die sich als Überschussschlamm gebildet haben, zurück gehalten werden und verlegen so nicht die relativ kleineren Zwischenräume zwischen den Körnern der zweiten (oberen) Schicht. Damit dauert es länger, bis die kleineren Zwischenräume in der zweiten Schicht verstopfen, die Zeit bis zur nächsten Spülung verlängert sich im Vergleich zu einer ersten (unteren) Schicht mit kleinerem Korndurchmesser, wie etwa in der DE 195 12 907 C1.

Dadurch, dass das erste (untere) Trägermaterial eine größere Dichte aufweist als das zweite (obere) Trägermaterial, werden sich auch nach einer Spülung des Festbettreaktors und der damit verbundenen Verwirbelung des Bettmaterials die gröberen Körner im Wesentlichen wieder als erste (untere) Schicht absetzen, und die feineren Körner wieder als zweite (obere) Schicht auf der ersten Schicht absetzen, sodass auch die spezialisierten Mikroorganismen wieder auf ihrem früheren Platz, nämlich in einem bestimmten Höhenbereich des Festbettreaktors, landen und ihre Tätigkeit fortsetzen können, da auch das Angebot an Nährstoffen aus dem Abwasser wieder in etwa jenem vor der Spülung entsprechen wird.

Das grobe Trägermaterial der ersten (unteren) Schicht wird Feststoffe zurück halten, es werden sich aerobe Mikroorganismen ansiedeln, die vorwiegend organische Verbindungen (Kohlenstoffverbindungen) abbauen. Am feinen Trägermaterial der zweiten (oberen) Schicht werden sich ebenfalls aerobe Mikroorganismen ansiedeln, die vorwiegend Stickstoffverbindungen abbauen, wo also eine Nitrifikation stattfindet. Es findet aber auch in der ersten (unteren) Schicht Nitrifikation statt, wenn auch mit geringeren Abbauraten als in der zweiten (oberen) Schicht.

Aufgrund der vergleichsweise höheren spezifischen Oberfläche in der zweiten (oberen) Schicht kann dort eine erhöhte Nitrifikation erreicht werden. Da die Überschussschlamm-Produktion dieser Nitrifikations-Bakterien sehr gering ist, kann der gebildete Überschussschlamm im feinen Trägermaterial zurück gehalten werden.

Schließlich können sich in der zweiten (oberen) Schicht aufgrund der Abwesenheit von organischen Verbindungen, welche bereits in der ersten (unteren) Schicht abgebaut worden sind, spezialisierte Mikroorganismen ansiedeln, welche in der Lage sind, sogenannte Mikroverunreinigungen und auch schwer abbaubare Substanzen abzubauen.

Mikroverunreinigungen sind organische Spurenstoffe, die in sehr tiefen Konzentrationen (Milliardstel- bis Millionstel-Gramm pro Liter) in den Gewässern nachgewiesen werden. Bei diesen Stoffen handelt es sich um Pflanzenschutzmittel, Medikamente, Biozide, Inhaltsstoffe aus Körperpflegeprodukten, Imprägnierungen, Reinigungsmitteln, Farben etc., die aus verschiedensten Quellen wie Landwirtschaft, Haushalt, Bau und Verkehr in die Gewässer gelangen.

Als schwer abbaubare Substanzen gelten etwa Halogenkohlenwasserstoffe (wie chlorierte Kohlenwasserstoffe), polykondensierte aromatische Kohlenwasserstoffe (PAK) und Tenside. Schwer abbaubare Substanzen treten im Gegensatz zu Mikroverunreinigungen in höheren Konzentrationen auf.

Eine Belüftungseinrichtung kommt dann zum Einsatz, wenn Mikroorganismen eingesetzt werden, die Sauerstoff für den Abbau von Verunreinigungen benötigen. Soll das erfindungsgemäße Festbett aber zur Filtration und Adsorption von Abwasser eingesetzt werden, ist eine Belüftungseinrichtung nicht notwendig bzw. wird eine etwaige vorhandene Belüftungseinrichtung nicht verwendet.

Das Trägermaterial der ersten (unteren) Schicht sollte am besten eine Korngröße von 1 - 6 mm, vorzugsweise von 2 - 5 mm, aufweisen, jenes der zweiten (oberen) Schicht eine Korngröße von 1 - 4 mm, vorzugsweise von 1,5 - 3 mm. Der absolute Korngrößenunterschied zwischen erster und zweiter Schicht, also erstem und zweitem Trägermaterial, sollte dabei zumindest 0,5 mm betragen.

Das Trägermaterial der ersten (unteren) Schicht weist erfindungsgemäß eine Dichte von 1200 bis 1600 g/l, vorzugsweise von 1200 bis 1500 g/l, auf, jenes der zweiten (oberen) Schicht eine Dichte von 1100 bis 1400 g/l, vorzugsweise von 1200 bis 1300 g/l. Unter "Dichte" wird hier die Rohkorndichte nass verstanden. Der absolute Dichteunterschied zwischen erster und zweiter Schicht, also erstem und zweitem Trägermaterial, beträgt dabei zumindest 100 g/l.

Das Trägermaterial der ersten (unteren) Schicht kann Blähschiefer sein. Blähschiefer wird aus zerkleinertem Schieferton hergestellt, beim Brennen wird dieser senkrecht zur Schieferungsebene aufgebläht. Anders als beim Blähton besitzen die Körner eine gedrungene, kantige Form. Blähschiefer ist je nachdem, ob nach dem Brand ein Brechvorgang erfolgt oder nicht, mit geschlossener oder offenporiger Oberfläche erhältlich. Für die erfindungsgemäße Anwendung wird Blähschiefer mit offenporiger Oberfläche verwendet. Es kann aber als Trägermaterial der ersten (unteren) Schicht auch Blähton und Anthrazit verwendet werden.

In die Verteilkammer mündet eine Spülwasserleitung, über welche das für die Rückspülung benötigte Wasser mittels einer Pumpe in den Festbettreaktor eingebracht werden kann.

Auch wenn das erfindungsgemäße Festbett unbelüftet zur Filtration und Adsorption verwendet wird, werden die gleichen Trägermaterialen für die erste (untere) Schicht verwendet, die dann dem mechanischen Filtern von Feststoffen dient.

Das Trägermaterial der zweiten (oberen) Schicht kann Blähton sein. Als Rohstoff für Blähton wird kalkarmer Ton mit fein verteilten organischen Bestandteilen verwendet. Dieser wird gemahlen, granuliert und bei rund 1200°C im Drehrohrofen gebrannt. Dabei verbrennen die organischen Zuschlagsstoffe und das Material bläht sich kugelförmig auf. Blähton erreicht dabei das Vier- bis Fünffache des Ausgangsvolumens. Der Kern ist geschlossenporig, die Oberfläche gesintert. Nach einem Brechvorgang weist er eine offenporige Oberfläche auf, die für die erfindungsgemäße Anwendung notwendig ist. Statt Blähton kann aber auch Blähschiefer verwendet werden.

Wird der Festbettreaktor zur Filterung und Adsorption verwendet, so wird als Trägermaterial der zweiten (oberen) Schicht Aktivkohle und/oder Anthrazit verwendet, welche dann vorwiegend der physikalischen Adsorption dienen. Dadurch, dass das Abwasser zuerst auf die erste (untere) Schicht trifft, wird die zweite (obere) Schicht durch die erste (untere) Schicht geschützt und weniger stark belastet als dies bei einem einschichtigen Festbett aus Aktivkohle und/oder Anthrazit der Fall wäre. Dadurch kann das Trägermaterial der zweiten (oberen) Schicht länger verwendet werden, es verlängert sich die Standzeit des Adsorbens.

Grundsätzlich kann für erste (untere) und zweite (obere) Schicht die gleiche Sorte von Trägermaterial verwendet werden, also etwa für beide Schichten Blähton oder für beide Schichten Blähschiefer. Die beiden Schichten unterscheiden sich dann jedenfalls durch die Dichte und die Korngröße.

Selbstverständlich können für eine Schicht auch Mischungen aus verschiedenen Trägermaterialien verwendet werden, sofern nur die wesentlichen hydraulischen Eigenschaften, also Dichte und Korngröße, den Anforderungen der ersten bzw. zweiten Schicht entsprechen.

Das Verfahren zum Betreiben eines erfindungsgemäßen Festbettreaktors sieht vor, dass Abwasser von unten nach oben durch erste und zweite Schicht geleitet wird und anschließend aus dem Festbettreaktor entfernt wird, wobei die Abwasserbelastung so gewählt wird, dass es zu keiner wesentlichen Vermischung der beiden Schichten kommt. Selbstverständlich kann es an der Grenze zwischen erster und zweiter Schicht immer zu einer geringen Vermischung der beiden unterschiedlichen Trägermaterialien kommen, jedoch sollte der Großteil des Trägermaterials der ersten Schicht unter dem Trägermaterial der zweiten Schicht bleiben. In der Regel wird es auch kaum oder gar nicht zu einer Expansion der beiden Schichten kommen, das heißt, während des Betriebes des Festbettreaktors berühren einander in der Regel die Körner der ersten und zweiten Schicht, sie können sich nicht bewegen.

Weiters kann vorgesehen werden, dass das Reinigen des Festbetts, bestehend aus erster und zweiter Schicht, mittels Rückspülen erfolgt, wobei Wasser von unten nach oben durch den Festbettreaktor geleitet wird und die Wassergeschwindigkeit so gewählt wird, dass die beiden Schichten zumindest teilweise fluidisiert werden und anschließend die Wasserzufuhr verringert wird, sodass sich das Festbett in Form der beiden getrennten Schichten absetzt. Beim Rückspülen wird zumindest ein Teil der Körner aus erster und zweiter Schicht im Rückspülwasser fluidisiert, das heißt, sie können sich frei bewegen. Dabei wird beim Rückspülen in zumindest einem ersten Schritt die Wassergeschwindigkeit und/oder die Geschwindigkeit von Spülluft so gewählt, dass es zu einem relativ intensiven Kontakt des Trägermaterials mit Wasser und/oder Luft und dadurch zu einer mindestens teilweisen Vermischung der beiden Schichten kommt, erst in einem letzten Schritt, bei dem keine Spülluft mehr eingebracht wird, wird die Wassergeschwindigkeit so gewählt, dass zwar noch eine Fluidisierung statt findet, das Trägermaterial also in Schwebe gehalten wird, jedoch keine intensive Verwirbelung mehr stattfindet, womit aufgrund ihrer unterschiedlichen hydraulischen Eigenschaften eine Trennung des ersten und zweiten Trägermaterials erfolgt. Dann wird die Zufuhr an Wasser zur Rückspülung zumindest verringert, in der Regel aber ganz gestoppt. Es wird abgewartet, bis sich die Körner wieder am Boden bzw. Zwischenboden des Festbettreaktors abgesetzt haben. Das erste und zweite Trägermaterial werden sich in der Folge wieder als erste und zweite Schicht übereinander absetzen. Erst dann wird das restliche Rückspülwasser entfernt bzw. wird wieder neues Abwasser in den Festbettreaktor geleitet und der Betrieb beginnt wieder.

### WEGE ZUR AUSFÜHRUNG DER ERFINDUNG

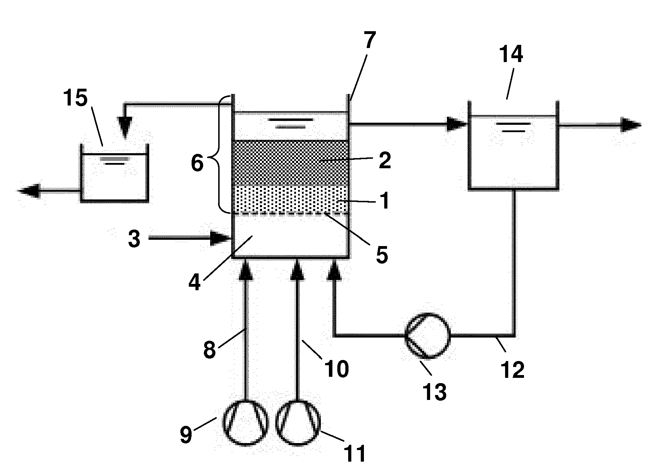

In der Figur ist ein erfindungsgemäßer Festbettreaktor 7 schematisch im Längsschnitt dargestellt. Er weist in der Regel einen rechteckigen Querschnitt mit einer Filterfläche (dem Querschnitt, der tatsächlich mit Trägermaterial befüllt ist) von 5-150 m² auf und wird als Betonbecken ausgeführt, in welchem das Trägermaterial mit einer Höhe von 2-5 m aufgeschüttet ist. Der Festbettreaktor 7 könnte aber auch als Tank mit einem zylindrischen Querschnitt und einem Innendurchmesser von 1 bis 6 m ausgeführt sein, wobei die Füllhöhe des Trägermaterials wie beim rechteckigen Querschnitt 2-5 m beträgt.

Im Festbettreaktor 7 ist eine erste (untere) Schicht 1 aus Blähschiefer mit einer Korngröße von 2,5 bis 4 mm und einer Rohkorndichte von 1430 g/l im nassen Zustand angeordnet. Direkt darauf ist die zweite (obere) Schicht 2 aufgeschüttet, sie besteht aus gebrochenem Blähton mit einer Korngröße im Bereich von 1,6 bis 2,5 mm und einer Rohkorndichte von 1220 g/l im nassen Zustand. Die erste (untere) Schicht ist 0,5 bis 3 m hoch und die zweite (obere) Schicht ist 2 bis 3 m hoch.

Der Zulauf 3 für Abwasser befindet sich beim gegenständlichen Festbettreaktor nahe dem Boden, sodass das zu reinigende Abwasser von unten nach oben durch den Festbettreaktor strömt. Der Zulauf 3 mündet hier seitlich über dem Boden in eine sich über den gesamten Reaktorquerschnitt erstreckende Verteilkammer 4, die durch einen waagrechten Zwischenboden 5 vom darüber liegenden befüllbaren Volumen 6 für das Trägermaterial getrennt ist. Durch nicht dargestellte Düsen im Zwischenboden 5 wird das Abwasser in das befüllbare Volumen 6 eingebracht.

Die Belüftungseinrichtung für Prozessluft, umfasst eine Luftleitung 8, die ebenfalls in die Verteilkammer 4 mündet. Die Luftleitung 8 wird durch einen Kompressor 9 mit Luft versorgt. Die Luft gelangt über die gleichen Düsen im Zwischenboden 5 in das befüllbare Volumen 6 und damit in die beiden Schichten 1, 2.

Oberhalb der zweiten Schicht 2 ist noch freier Raum vorgesehen, damit das Trägermaterial der beiden Schichten 1, 2 beim Rückspülen genug Platz hat, um fluidisiert zu werden. Dieser freie Raum, auch als Überstau bezeichnet, hat eine Höhe von 0,5 bis 1,5 m.

In die Verteilkammer 4 mündet auch eine weitere Luftleitung 10, durch welche mittels eines weiteren Kompressors 11 Rückspülluft in den Festbettreaktor 7 eingebracht werden kann. Das für die Rückspülung benötigte Wasser wird über eine Spülwasserleitung 12, die ebenfalls in die Verteilkammer 4 mündet, mittels einer Pumpe 13 in den Festbettreaktor 7 eingebracht. Die Spülwasserleitung zweigt vom Spülwasserbecken 14 ab, in welches im Festbettreaktor 7 gereinigtes Wasser gesammelt wird. Das Schlammwasserbecken 15 nimmt das bei der Rückspülung aus dem Festbettreaktor 7 ausgespülte Schlammwasser auf.

### FUNKTIONSWEISE DER ERFINDUNG

Im Betriebszustand des Festbettreaktors 7 wird über den Zulauf 3 Abwasser und gegebenenfalls über die Luftleitung 8 Luft von unten nach oben durch erste und zweite Schicht 1, 2 geleitet, das so gereinigte Wasser wird oberhalb der beiden Schichten 1, 2 aus dem Festbettreaktor 7 abgezogen und über das Spülwasserbecken 14 abgezogen. Die Belüftung kann dabei sowohl kontinuierlich, also während des gesamten Betriebes, als auch intermittierend erfolgen, also nur periodisch ein- und abgeschaltet werden, oder gar nicht eingeschaltet werden. Die Abwasserbelastung und auch die Belüftung, falls erforderlich, wird dabei jedenfalls so gewählt, dass es zu keiner Vermischung und in der Regel auch zu keiner Expansion der beiden Schichten 1, 2 kommt. Die Geschwindigkeit, mit welcher das Abwasser über den Zulauf eingebracht wird (also die Abwasserbelastung), liegt beispielsweise im Bereich von 5-15 m/h, also 5-15 m³ Wasser pro m² Querschnittsfläche des befüllbaren Volumens 6 und pro Stunde.

Nach einer bestimmten Betriebszeit wird der Festbettreaktor 7 gespült, man sagt auch rückgespült, obwohl beim gegenständlichen Ausführungsbeispiel mit gereinigtem Wasser in Durchflussrichtung des Abwassers im Betriebszustand gespült wird. Zusätzlich dazu oder abwechselnd zur Rückspülung mit Wasser kann durch die gegebenenfalls vorhandene Belüftungseinrichtung 8, 9, meist aber durch eine eigene Belüftungseinrichtung 10, 11, Luft eingebracht werden, um einen intensiveren Kontakt der beiden Trägermaterialien zu erreichen, sodass dieses von anhaftenden Belägen teilweise gereinigt wird. Hierzu wird Luft beispielsweise mit einer Geschwindigkeit von etwa 50-100 m/h eingebracht, während im Unterschied dazu diese Geschwindigkeit im Betrieb zur Belüftung gegebenenfalls im Bereich von etwa 5-20 m/h liegt.

Nach dem Einbringen von Luft zur Unterstützung der Rückspülung erfolgt als letzter Schritt des Reinigens des Festbetts eine Rückspülung mit Wasser über die Spülwasserleitung 12. Die Wassergeschwindigkeit wird dabei so gewählt, dass die beiden Schichten zumindest teilweise fluidisiert werden, wobei eine Trennung der Körner der beiden Schichten 1, 2 erfolgt und diese nicht mehr vermischt werden. Dabei dehnt sich die erste (untere) Schicht um 5 bis 20% aus, die zweite (obere) Schicht kann sich sogar bis um 30 bis 50% ausdehnen. Typische Geschwindigkeiten, mit denen das Spülwasser in den Festbettreaktor 7 eingebracht wird, liegen im Bereich von 20-80 m/h, also 20-80 m³ Wasser pro m² Querschnittsfläche des befüllbaren Volumens 6 und pro Stunde, bevorzugt im Bereich von 40-60 m/h. Dadurch werden die beiden verschiedenen Trägermaterialien aufgrund ihrer unterschiedlichen hydraulischen Eigenschaften wieder in zwei jeweils homogene Schichten getrennt, das schwerere, gröbere Trägermaterial in der unteren Schicht, das leichtere, feinere Material in der oberen Schicht. Nach dem Abschalten - innerhalb von typischer Weise 10 bis 30 Sekunden - setzen sich die beiden Schichten entsprechend wieder ab, anschließend kann der Festbettreaktor wieder in den Betriebszustand übergehen.

Die Filterlaufzeit, also die Zeit zwischen zwei Spülungen, hängt von der organischen Belastung sowie von der Feststoffbelastung ab. Für die Anwendung im kommunalen Abwasser wird das Festbett typischer Weise jeden Tag gespült.

### BEZUGSZEICHENLISTE

- 1: erste (untere) Schicht
- 2: zweite (obere) Schicht
- 3: Zulauf für Abwasser
- 4: Verteilkammer
- 5: Zwischenboden
- 6: befüllbares Volumen
- 7: Festbettreaktor
- 8: Luftleitung
- 9: Kompressor für Luftleitung 8
- 10: weitere Luftleitung
- 11: weiterer Kompressor für Luftleitung 10
- 12: Spülwasserleitung
- 13: Pumpe für Spülwasserleitung 12
- 14: Spülwasserbecken
- 15: Schlammwasserbecken

## Patentansprüche

1. Festbettreaktor (7) zur biologischen Abwasserreinigung, umfassend zumindest
- eine erste Schicht (1) bestehend aus einem körnigen ersten Trägermaterial, sowie
- eine darüber befindliche zweite Schicht (2) bestehend aus einem körnigen zweiten Trägermaterial, welches eine geringere Dichte als das erste Trägermaterial aufweist, jedoch schwerer als Wasser ist,
- einen Zulauf (3) für Abwasser nahe dem Boden des Festbettreaktors (7),
- einen Zwischenboden (5) mit einem darüber liegenden befüllbaren Volumen (6) für das Trägermaterial,
- eine Verteilkamrner (4), welche durch den waagrechten Zwischenboden (5) vom darüber liegenden befüllbaren Volumen (6) für das Trägermaterial getrennt ist,
**dadurch gekennzeichnet,**
**dass** nur diese beiden Schichten (1,2) aus Trägermaterial im befüllbaren Volumen (6) anbeordnet sind,
**dass** das erste Trägermaterial eine größere Korngröße aufweist als das zweite Trägermaterial
**dass** das erste Trägermaterial eine Rohkorndichte nass von 1200 bis 1600 g/l, vorzugsweise von 1200 bis 1500 g/l, aufweist, und
**dass** das zweite Trägermaterial eine Rohkorndichte nass von 1100 bis 1400 g/l, vorzugsweise von 1200 bis 1300 g/l, aufweist,
wobei der absolute Dichteunterschied zwischen erstem und zweitem Trägermaterial zumindest 100 g/l beträgt, und
**dass** in die Verteilkammer (4) eine Spülwasserleitung (12) mündet, über welche das für die Rückspülung benötigte Wasser mittels einer Pumpe (13) in den Festbettreaktor (7) eingebracht werden kann.

2. Festbettreaktor (7) nach Anspruch 1, **dadurch gekennzeichnet, dass** dieser eine Belüftungseinrichtung (8, 9) aufweist.

3. Festbettreaktor (7) nach Anspruch 1 oder 2, **dadurch gekennzeichnet, dass** das erste Trägermaterial eine Korngröße von 1 - 6 mm, vorzugsweise von 2 - 5 mm, aufweist.

4. Festbettreaktor (7) nach einem der Ansprüche 1 bis 3, **dadurch gekennzeichnet, dass** das zweite Trägermaterial eine Korngröße von 1 - 4 mm, vorzugsweise von 1,5 - 3 mm, aufweist.

5. Festbettreaktor (7) nach einem der Ansprüche 1 bis 4, **dadurch gekennzeichnet, dass** das erste Trägermaterial Blähschiefer, Blähton oder Anthrazit ist.

6. Festbettreaktor (7) nach einem der Ansprüche 1 bis 5, **dadurch gekennzeichnet, dass** das zweite Trägermaterial Blähton oder Blähschiefer ist.

7. Festbettreaktor (7) nach einem der Ansprüche 1 bis 5, **dadurch gekennzeichnet, dass** das zweite Trägermaterial Aktivkohle und/oder Anthrazit ist.

8. Verfahren zum Betreiben eines Festbettreaktors (7) nach einem der Ansprüche 1 bis 7, **dadurch gekennzeichnet, dass** Abwasser von unten nach oben durch erste (1) und zweite Schicht (2) geleitet wird und anschließend aus dem Festbettreaktor (7) entfernt wird, wobei die Abwasserbelastung mit 5-15 m/h so gewählt wird, dass es zu keiner wesentlichen Vermischung der beiden Schichten (1, 2) kommt, indem nämlich ein Großteil des Trägermaterials der ersten Schicht (1) unter dem Trägermaterial der zweiten Schicht (2) bleibt und dass das Reinigen des Festbetts, bestehend aus erster (1) und zweiter Schicht (2), mittels Rückspülen erfolgt, wobei Wasser von unten nach oben durch den Festbettreaktor (7) geleitet wird und die Wassergeschwindigkeit mit 20-80 m/h, bevorzugt mit 40-60 m/h, so gewählt wird, dass die beiden Schichten (1, 2) zumindest teilweise fluidisiert werden und anschließend die Wasserzufuhr verringert wird, sodass sich das Festbett in Form der beiden getrennten Schichten (1, 2) absetzt.

## Claims

1. A fixed-bed reactor (7) for biological wastewater purification, comprising at least
- one first layer (1) consisting of a granular first carrier material, and
- one second layer (2) situated above said first layer and consisting of a granular second carrier material that has a lower density than the first carrier material but is heavier than water,
- an inlet (3) for wastewater close to the base of the fixed-bed reactor (7),
- an intermediate bottom (5) with a fillable volume (6) for the carrier material that is situated above,
- a distribution chamber (4) which is separated by the horizontal intermediate bottom (5) from the fillable volume (6) for the carrier material that is situated above,
**characterized in that**
only these two layers (1, 2) of carrier material are arranged in the fillable volume (6),
the first carrier material has a greater grain size than the second carrier material, the first carrier material has a wet raw grain density of 1200 to 1600 g/L, preferably 1200 to 1500 g/L, and
the second carrier material has a wet raw grain density of 1100 to 1400 g/L, preferably 1200 to 1300 g/L,
wherein the absolute density difference between the first and second carrier material is at least 100 g/L, and
a scavenging water conduit (12) opens into the distribution chamber (4), via which the water required for backwashing can be introduced into the fixed-bed reactor (7) by means of a pump (13).

2. A fixed-bed reactor (7) according to claim 1, **characterized in that** it comprises a ventilation device (8, 9).

3. A fixed-bed reactor (7) according to claim 1 or 2, **characterized in that** the first carrier material has a grain size of 1 to 6 mm, preferably 2 to 5 mm.

4. A fixed-bed reactor (7) according to one of the claims 1 to 3, **characterized in that** the second carrier material has a grain size of 1 to 4 mm, preferably 1.5 to 3 mm.

5. A fixed-bed reactor (7) according to one of the claims 1 to 4, **characterized in that** the first carrier material is bloated shale, bloated clay or anthracite.

6. A fixed-bed reactor (7) according to one of the claims 1 to 5, **characterized in that** the second carrier material is bloated clay or bloated shale.

7. A fixed-bed reactor (7) according to one of the claims 1 to 5, **characterized in that** the second carrier material is activated carbon and/or anthracite.

8. A method for operating a fixed-bed reactor (7) according to one of the claims 1 to 7, **characterized in that** wastewater is conducted from bottom to top through the first (1) and second layer (2) and is subsequently removed from the fixed-bed reactor (7), wherein the wastewater loading with 5 to 15 m/h is chosen in such a way that no relevant mixing of the two layers (1, 2) occurs, **in that** a major part of the carrier material of the first layer (1) remains beneath the carrier material of the second layer (2), and the cleaning of the fixed bed, consisting of the first (1) and second layer (2), occurs by means of backwashing, wherein the water is conducted from bottom to top through the fixed-bed reactor (7) and the water velocity is chosen at 20 to 80 m/h, preferably 40 to 60 m/h, in such a way that the two layers (1, 2) are fluidised at least in part and subsequently the water supply is reduced, so that the fixed bed settles in form of the two separate layers (1, 2).

## Revendications

1. Réacteur à lit fixe (7) pour l'épuration biologique des eaux usées, comprenant au moins
- une première couche (1) composé d'un premier matériau de substrat en grains, et
- une deuxième couche (2) située par-dessus et composée d'un deuxième matériau de substrat en grains, qui présente une densité inférieure à celle du premier matériau de substrat mais qui est plus lourd que l'eau,
- une arrivée (3) d'eaux usées près du fond du réacteur à lit fixe (7),
- un double fond (5) avec un volume pouvant être rempli (6) situé par dessus pour le matériau de substrat,
- une chambre de distribution (4), qui est séparée par le double fond (5) horizontal du volume pouvant être rempli (6) situé par dessus pour le matériau de substrat,
**caractérisé en ce que**
seules ces deux couches (1,2) de matériau de substrat sont disposées dans le volume pouvant être rempli (6),
**en ce que** le premier matériau de substrat présente une grosseur de grains supérieure à celle du deuxième matériau de substrat,
**en ce que** le premier matériau de substrat présente une densité apparente de grains à l'état humide de 1200 à 1600 g/l, de préférence de 1200 à 1500 g/l, et
**en ce que** le deuxième matériau de substrat présente une densité apparente de grains à l'état humide de 1100 à 1400 g/l, de préférence de 1200 à 1300 g/l,
la différence absolue de densité entre le premier matériau de substrat et le deuxième étant d'au moins 100 g/l, et
**en ce que** débouche dans la chambre de distribution (4) une conduite d'eau de rinçage (12) par laquelle l'eau nécessaire au rinçage à contre-courant peut être introduite au moyen d'une pompe (13) dans le réacteur à lit fixe (7).

2. Réacteur à lit fixe (7) selon la revendication 1, **caractérisé en ce qu'**il possède un dispositif d'aération (8, 9).

3. Réacteur à lit fixe (7) selon la revendication 1 ou 2, **caractérisé en ce que** le premier matériau de substrat présente une granulométrie de 1 à 6 mm, de préférence de 2 à 5 mm.

4. Réacteur à lit fixe (7) selon l'une des revendications 1 à 3, **caractérisé en ce que** le deuxième matériau de substrat présente une granulométrie de 1 à 4 mm, de préférence de 1,5 à 3 mm.

5. Réacteur à lit fixe (7) selon l'une des revendications 1 à 4, **caractérisé en ce que** le premier matériau de substrat est du schiste expansé, de l'argile expansée ou de l'anthracite.

6. Réacteur à lit fixe (7) selon l'une des revendications 1 à 5, **caractérisé en ce que** le deuxième matériau de substrat est de l'argile expansée ou du schiste expansé.

7. Réacteur à lit fixe (7) selon l'une des revendications 1 à 5, **caractérisé en ce que** le deuxième matériau de substrat est du charbon actif et/ou de l'anthracite.

8. Procédé de pilotage d'un réacteur à lit fixe (7) selon l'une des revendications 1 à 7, **caractérisé en ce que** des eaux usées sont amenées de bas en haut à travers la première couche (1) et la deuxième (2) puis retirées du réacteur à lit fixe (7), la charge d'eaux usées étant choisie entre 5 et 15 m/h de telle manière qu'il n'y ait pas de mélange notable des deux couches (1,2), par le fait qu'une grande partie du matériau de substrat de la première couche (1) reste sous le matériau de substrat de la deuxième couche (2), et en ce le nettoyage du lit fixe composé de la première couche (1) et de la deuxième (2) est effectué au moyen d'un rinçage à contre-courant, l'eau étant amenée de bas en haut à travers le réacteur à lit fixe (7) et la vitesse de l'eau étant choisie entre 20 et 80 m/h, de préférence entre 40 et 60 m/h, de telle manière que les deux couches (1, 2) soient au moins partiellement fluidisées, et l'apport d'eau étant ensuite réduit de telle façon que le lit fixe se dépose sous la forme des deux couches (1,2) séparées.
